(19) Europäisches Patentamt
European Patent Office
Office européen des brevets

(11) **EP 4 056 267 A1**

(12) **EUROPÄISCHE PATENTANMELDUNG**

(43) Veröffentlichungstag:
**14.09.2022   Patentblatt 2022/37**

(21) Anmeldenummer: **21161951.5**

(22) Anmeldetag: **11.03.2021**

(51) Internationale Patentklassifikation (IPC):
**B01J 21/10** (2006.01)   **B01J 23/42** (2006.01)
**C07G 1/00** (2011.01)

(52) Gemeinsame Patentklassifikation (CPC):
**B01J 35/1014; B01J 23/007; B01J 23/892;
B01J 35/002; B01J 35/0053; B01J 37/0201;
B01J 37/08; B01J 37/18; C07G 1/00;** B01J 21/10

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Heraeus Deutschland GmbH & Co. KG
63450 Hanau (DE)**

(72) Erfinder:
• **MEISSNER, Dr. Gisa
63450 Hanau (DE)**

• **SPOD, Dr. Hendrik
63450 Hanau (DE)**
• **KRACK, Silke
63450 Hanau (DE)**
• **KAMM, Birgit
4040 Linz (AT)**
• **SÜSS, Raphaela
4040 Linz (AT)**

(74) Vertreter: **Heraeus IP
Heraeus Business Solutions GmbH
Intellectual Property
Heraeusstraße 12-14
63450 Hanau (DE)**

(54) **VERFAHREN UND KATALYSATOR ZUR HERSTELLUNG VON PHENOLBAUSTEINEN AUS LIGNIN**

(57)   **Verfahren und Katalysator zur Herstellung von Phenolbausteinen aus Lignin**

Die Erfindung betrifft ein Verfahrens zum katalysierten Abbau von Lignin mit einer hohen Ausbeute und hoher Selektivität für Phenolbausteine bei minimaler Bildung der Koks-Fraktion und einen für das Verfahren geeigneten Katalysator. Der Katalysator enthält ein basisches Trägermaterial, Platin in einem Gewichtsanteil von 1 - 10 Gew.-% und Nickel in einem Gewichtsanteil von 0 - 5 Gew.-%. Das Verfahren, umfasst das Bereitstellen einer Reaktionsmischung, umfassend Lignin, den Katalysator und ein Lösungsmittel und das Erwärmen der Reaktionsmischung unter Erhalt einer Mischung, umfassend ein Produktgemisch, den Katalysator und das Lösungsmittel.

Abbildung 4

EP 4 056 267 A1

**Beschreibung**

Die Herstellung von chemischen Bausteinen aus erneuerbaren Quellen gewinnt immer mehr an Bedeutung, da die globalen Vorräte an klassischen, fossilen Ressourcen begrenzt sind. Die Nutzung von Biomasse aus nachwachsenden Rohstoffen als Basis für die Gewinnung einer großen Bandbreite an Chemikalien ist daher Gegenstand intensiver Forschungsbemühungen. Lignocelluläres Material, das aus land- und forstwirtschaftlichen Quellen wie Holz gewonnen werden kann, ist nahezu unbegrenzt und nachwachsend verfügbar. Es besteht aus drei Hauptkomponenten: Cellulose, Hemicellulose und Lignin. Während die Nutzungsmöglichkeiten der ersten beiden Komponenten zur Synthese von Grundchemikalien oder Brennstoffkomponenten schon relativ gut untersucht sind, ist die Verwendung von Lignin als Rohmaterial im selben Ausmaß noch nicht etabliert.

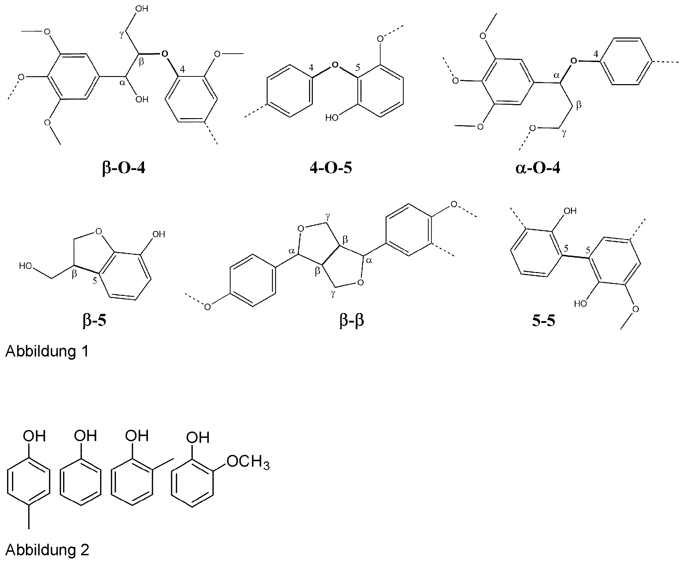

Lignin ist eines der am häufigsten vorkommenden Biopolymere und das einzige, das aus aromatischen Monomerbausteinen aufgebaut ist. Es ist ein amorphes 3-D Polymer, das hauptsächlich in den Zellwänden von Pflanzen vorkommt. Die Monomerbausteine, die s.g. Monolignine, umfassen vor allem Phenylpropan-Alkohole, hauptsächlich Cumarylalkohol, Coniferylalkohol und Sinapylalkohol. Die aromatischen Ringe können variierende Substituenten, wie Hydroxyl-Gruppen, Alkoxy-Gruppen, Ether-Gruppen, Alkyl-Gruppen, Aldehyd-Gruppen oder Keton-Gruppen tragen; die genaue Zusammensetzung sowie das Molekulargewicht variieren von Pflanze zu Pflanze. Die einzelnen Bausteine sind über unterschiedliche Bindungstypen, wie Alkyl-, Aryl- und Etherbindungen, verknüpft; die β-O-4-Knüpfung ist dabei die am häufigsten vorkommende. Abbildung 1 gibt eine Übersicht über die verschiedenen Bindungstypen im Lignin.

Durch die zugrundeliegende Polyphenolstruktur ist Lignin ein idealer Kandidat um als Ausgangsstoff für die Synthese von hochwertigen aromatischen Feinchemikalien zu dienen, die als Basis zur Synthese weiterer chemischer Produkte dienen können. In Abbildung 2 sind beispielhaft Phenolkomponenten gezeigt, die die unterschiedlichen Strukturmotive solcher gewünschter Phenolkomponenten verdeutlichen. Allerdings macht die Heterogenität der Lignin-Struktur es schwierig, effektive und selektive Prozesse zur Gewinnung von niedermolekularen Komponenten zu entwickeln.

Lignin kann aus Hölzern (z.B. Kiefer, Pappel, Birke), Jahrespflanzen (z.B. Weizenstroh, Miscanthus, Rutenhirse) oder landwirtschaftlichen Reststoffen (z.B. Zuckerrohrbagasse) durch verschiedene Extraktionsprozesse isoliert werden, wobei die makromolekulare Struktur des Lignins stark von der botanischen Quelle, dem Standort, der Jahreszeit und dem Isolationsprozess abhängt. Zum Abbau von Lignin gibt es bereits eine Reihe von Verfahren, darunter Pyrolyse, saure oder basische Hydrolyse und selektivere katalytische Reaktionen, aber auch biologische Verfahren unter Einsatz von Enzymen. Eine Übersicht über solche Prozesse im Umfeld von Bioraffinerieprozessen findet man beispielsweise in "Biorefineries-Industrial Processes and Products" (Kamm et al., in Ullmann's Encyclopedia of Industrial Chemistry, Electronic Release, 7th ed. WILEY-VCH, 2007). Es kann dabei notwendig sein, das Lignin vor der Depolymerisierung abzutrennen, wofür sich beispielsweise der Organosolv-Prozess etabliert hat, bei dem lignocelluäres Ausgangsmaterial in Lignin und weitere kohlenhydrathaltige Bestandteile separiert wird.

Ein unerwünschtes Abbauprodukt bei der Depolymerisierung von Lignin können polymere Komponenten sein, die durch radikalische Umlagerungsreaktionen entstehen. Diese Komponenten werden im Allgemeinen als Koks-Fraktion, im Englischen als *"coke"*, *"char"* und/oder *"tar"* bezeichnet und sind amorphe, inhomogene Produktfraktionen, die nicht weiterverarbeitet werden können. Vor allem bei un-katalysierten Reaktionen oder beim Einsatz von Katalysatoren mit ungeeigneter Selektivität vermindert die Bildung dieser Fraktion die Ausbeute an gewünschten Produkten, wie beispielsweise in "Catalytic Transformation of Lignin for the Production of Chemicals and Fuels" dargestellt (Li et al. Chem. Rev. 2015, 115, 11559-11624).

Ein Typ von katalysierter Abbaureaktion ist die basisch katalysierte Depolymerisation (BCD, engl. *base catalysed depolymerisation*), bei deren homogener Variante das abzubauende Lignin bei hohen Temperaturen und hohem Druck mit der Lösung einer mineralischen Base behandelt wird. Diese Reaktion ist zwar geeignet, um zumindest teilweise gewünschte Produkte, wie Phenol- und Catecholderivate, herzustellen, ist aber aufgrund der großen Mengen anfallender stark-basischer Lösungsreste nicht in großem Maßstab industriell anwendbar. Eine Alternative stellt die Verwendung eines heterogenen Katalysators dar, der nach der Reaktion einfach von der Reaktionsmischung abgetrennt und wiederverwendet werden kann.

Typischerweise werden solche Reaktionen unter Schutzgas- und/oder Wasserstoffatmosphäre durchgeführt, was die Anforderungen an die eingesetzte Prozesstechnik im Vergleich zu einem Prozess, der unter Atmosphärenbedingungen stattfinden kann, deutlich erhöht.

Chaudharya et al. (Green Chemistry, 2017, 19, 778,788) beschreiben beispielsweise eine Reihe von Übergangsmetall-freien Katalysatoren, die zur BCD von Lignin geeignet sind, darunter Zeolithe, Metalloxide, Hydrotalcite und Hydroxyapatit. Die beschriebenen Reaktionsbedingungen ermöglichen zwar die Herstellung von relevanten Monomer- und Oligomerbausteinen, allerdings nur mit einer geringen Ausbeute und unter hohem Katalysatoreinsatz.

Mit Übergangsmetallen ausgestattete Trägermaterialien sind eine weitere Klasse von Katalysatoren, die zum Abbau von Lignin geeignet sind. In der US9631146B2 wird beispielsweise ein Verfahren beschrieben, in dem Nickel auf einem doppellagigen Hydroxid als Katalysator zum Einsatz kommt. Untersuchungen eines solchen Systems zeigten allerdings, dass die Ausbeute gewünschter Produkte durch einen hohen Anteil der Koks-Fraktion im Reaktionsprodukt relativ gering war.

Eine Aufgabe der vorliegenden Erfindung war die Bereitstellung eines Verfahrens zum katalysierten Abbau von Lignin mit einer hohen Ausbeute und hoher Selektivität für Phenolbausteine bei minimaler Bildung der Koks-Fraktion. Außerdem war es Aufgabe der vorliegenden Erfindung, ein Verfahren zum Abbau unter milden Reaktionsbedingungen, also niedriger Temperatur, niedrigem Druck und ohne Schutzgas- oder Wasserstoffatmosphäre, zu finden. Des Weiteren war es Teil der Aufgabe, die benötige Menge an eingesetztem Katalysator zu minimieren.

Außerdem war es Aufgabe, einen Katalysator bereitzustellen, der geeignet ist, im zu findenden Verfahren eingesetzt zu werden.

Gemäß einem ersten Aspekt der vorliegenden Erfindung wird die Aufgabe gelöst durch ein Verfahren, umfassend

a) Bereitstellen einer Reaktionsmischung A, umfassend Lignin, einen Katalysator und ein Lösungsmittel;
b) Erwärmen der Reaktionsmischung A unter Erhalt einer Mischung B, umfassend ein Produktgemisch, den Katalysator und das Lösungsmittel;
wobei der Katalysator

- ein basisches Trägermaterial,
- Platin in einem Gewichtsanteil von 1-10 Gew.-% und
- Nickel in einem Gewichtsanteil von 0 - 5 Gew.-% enthält.

Im erfindungsgemäßen Verfahren wird ein Katalysator eingesetzt, der Platin und optional Nickel auf einem basischen Trägermaterial enthält. Im Rahmen der vorliegenden Erfindung wurde erkannt, dass der Einsatz von Platin oder die Kombination dieser beiden Übergangsmetalle zu einem hohen Umsatz des eingesetzten Lignins bei gleichzeitiger Selektivität zur Bildung niedermolekularer Bestandteile führt. Als Umsatz ist hierbei die Gesamtmenge an gebildeten Produktfraktionen zu verstehen. Damit einhergehend ist auch eine erhöhte Ausbeute verbunden, also ein erhöhter Anteil der weiterverwendbaren oligomeren und monomeren Produktfraktionen im Verhältnis zum eingesetzten Lignin. Unter Selektivität ist in diesem Zusammenhang zu verstehen, dass als niedermolekulare Produktfraktionen hauptsächlich monomere und oligomere Phenol-Bausteine gebildet werden und die Bildung vorerwähnter Koks-Fraktionen vermieden wird.

Bevorzugt wird durch das erfindungsgemäße Verfahren ein Produktgemisch mit einem geringen Anteil der Koks-Fraktion erhalten.

Unter der Koks-Fraktion wird im Sinne der vorliegenden Erfindung die Produktfraktion verstanden, die weder in Wasser noch in den organischen Lösungsmitteln THF und Ethylacetat löslich ist. Dabei handelt es sich hauptsächlich um polymere Fraktionen, die durch radikalische Umlagerungsreaktionen des abzubauenden Lignins entstehen. Umfasst sein können aber auch niedermolekulare Kohlenstoffkomponenten oder kurzkettige Kohlenwasserstoffe, die durch konkurrierende Reaktionswege entstehen können. Durch die nicht-vorhandene Löslichkeit dieser Fraktion in praktisch allen gängigen Lösungsmitteln ist eine weitergehende Charakterisierung problematisch bis unmöglich. Als unlöslich wird im Rahmen der vorliegenden Erfindung verstanden, dass sich eine Substanz bei 25 °C und 1013 hPa zu weniger als 0,1 g/L im entsprechenden Lösungsmittel löst.

Die vorliegende Erfindung betrifft ein Verfahren zum katalysierten Abbau von Lignin.

Unter Lignin werden hierbei Lignin-Modellkomponenten, Lignin-enthaltende unbehandelte Biomasse, Lignin-haltige Anteile aus behandelter Biomasse und Lignine aus behandelter Biomasse verstanden. Die Biomasse kann aus Lignocellulose bestehen, wobei Cellulose und Hemicellulose aber auch ganz oder teilweise abgetrennt worden sein können. Die Biomasse kann beispielsweise Holz, Stroh, Bagasse, Recyclingholz oder spätgemähtes Gras umfassen. Die Behandlung kann durch chemische Vorbehandlung, durch physikalische Methoden oder durch biologische Methoden erfolgen.

In einer bevorzugten Ausführungsform stammt das Lignin aus Biomasse, wobei die Biomasse aus der Gruppe enthaltend Holz, Stroh, Bagasse, und spätgemähtem Gras ausgewählt sein kann. Bevorzugt ist das Lignin ausgewählt aus der Gruppe enthaltend Organosolv-Lignin, Kraft-Lignin, durch alkalischen Aufschluss erhaltenes Lignin, durch das Sulfat-Verfahren erhaltenes Lignin, durch das Sulfit-Verfahren erhaltenes Lignin, durch Extraktion mit Wasser erhaltenes Lignin, durch Hydrolyse mit Säuren erhaltenes Lignin, durch enzymatische Hydrolyse erhaltenes Lignin, durch Holzverzuckerung erhaltenes Lignin, durch Behandlung mit Mikroorganismen erhaltenes Lignin, Lignin aus Lignin-haltigen Prozessströmen der Bioraffinerie sowie deren Mischungen.

Bevorzugt hat das Lignin ein mittleres Molekulargewicht im Bereich von 3.000 g/mol - 20.000 g/mol, bevorzugter im Bereich von 4.000 g/mol - 15.000 g/mol.

Als "Abbau" wird die Dekonstruktion von polymeren Ligninen in oligomere oder monomere Bausteine mit niedrigerem Molekulargewicht verstanden, wobei die Bindungen zwischen den Bausteinen ganz oder teilweise aufgebrochen werden. Synonym kann auch Depolymerisierung verwendet werden.

Das erfindungsgemäße Verfahren umfasst das Bereitstellen einer Reaktionsmischung A, umfassend Lignin, einen Katalysator und ein Lösungsmittel.

Bevorzugt ist der Katalysator ein Trägerkatalysator. Unter Trägerkatalysatoren versteht man im Allgemeinen Katalysatoren, die ein Trägermaterial enthalten, dessen Oberfläche mit einem katalytisch aktiven Material in hochdisperser Form ausgestattet ist. Das Trägermaterial sollte dabei eine stabile Plattform für das katalytisch aktive Material bieten und unter den gewählten Reaktionsbedingungen stabil sein.

Der Katalysator enthält ein basisches Trägermaterial, das geeignet ist, das katalytisch aktive Material in der Reaktionsmischung zu verteilen. Unter basischen Trägermaterialien sind solche Trägermaterialien zu verstehen, die über basische Zentren verfügen, also als Brønsted-Base (Protonenakzeptor) oder Lewis-Base (Elektronenpaardonator) fungieren können. Basische Trägermaterialien sind beispielsweise Metalloxide, Mischhydroxide, Mischoxide, Zeolithe oder Tonmineralien.

In einer bevorzugten Ausführungsform verfügt das basische Trägermaterial über eine BET-Oberfläche von weniger als 150 $m^2/g$, bevorzugt weniger als 100 $m^2/g$, besonders bevorzugt weniger als 50 $m^2/g$. Bevorzugt verfügt das basische Trägermaterial über eine BET-Oberfläche im Bereich von 5 bis 150 $m^2/g$, bevorzugt im Bereich von 10 bis 100 $m^2/g$. Die BET-Oberfläche wird auch spezifische Oberfläche genannt und kann nach ISO 9277:2010 mit Stickstoff als Adsorbat bestimmt werden.

Bevorzugte basische Trägermaterialien enthalten eine Mischung aus zweiwertigen und dreiwertigen Kationen.

Bevorzugt enthält das basische Trägermaterial mindestens eine Art von zweiwertigem Kation $M^{2+}$ ausgewählt aus der Gruppe bestehend aus Magnesium ($Mg^{2+}$), Nickel ($Ni^{2+}$), Eisen ($Fe^{2+}$), Cobalt ($Co^{2+}$), Kupfer ($Cu^{2+}$), Zink ($Zn^{2+}$), Calcium ($Ca^{2+}$), Zinn ($Sn^{2+}$), Blei ($Pb^{2+}$) und Kombinationen davon. In einer bevorzugten Ausführungsform ist das zweiwertige Kation $M^{2+}$ Magnesium ($Mg^{2+}$).

Bevorzugt enthält das basische Trägermaterial mindestens eine Art von dreiwertigem Kation $M^{3+}$ ausgewählt aus der Gruppe bestehend aus Aluminium ($Al^{3+}$), Eisen ($Fe^{3+}$), Chrom ($Cr^{3+}$), Mangan ($Mn^{3+}$) und Kombinationen davon. In einer bevorzugten Ausführungsform ist das dreiwertige Kation $M^{3+}$ Aluminium ($Al^{3+}$).

Das Verhältnis von zwei- zu dreiwertigen Kationen ist variabel, bevorzugt liegt es im Bereich von 1:7 bis 7:1, bevorzugt im Bereich von 1:5 bis 5:1, am bevorzugtesten im Bereich von 1:3 bis 3:1.

Bevorzugte basische Trägermaterialien sind doppel-lagige Hydroxide (englisch double layered hydroxides, LDH) der Formel

$$[M^{2+}_{1-w}M^{3+}_w(OH)_2]^{w+} (A^{n-}_{w/n}) \cdot m\ H_2O,$$

wobei

$M^{2+}$ zweiwertige Kationen,
$M^{3+}$ dreiwertige Kationen und
$A^{n-}$ Anionen mit Ladung n sind,
m für die Anzahl von Wassermolekülen und w für das Molverhältnis zwischen dreiwertigen Kationen und der Gesamtmenge an Kationen steht.

Bevorzugt sind doppel-lagige Hydroxide kristalline Materialien, bestehend aus lamellen-artigen Strukturen.

In einer bevorzugten Ausführungsform enthält das doppel-lagige Hydroxid genau eine Sorte eines zweiwertigen Kations.

In einer bevorzugten Ausführungsform enthält das doppel-lagige Hydroxid genau eine Sorte eines dreiwertigen Kations.

Bevorzugt ist das zweiwertige Kation Magnesium ($Mg^{2+}$) und das dreiwertige Kation Aluminium ($Al^{3+}$).

Bevorzugt enthält das doppel-lagige Hydroxid mindestens eine Art von Anion ausgewählt aus der Gruppe bestehend aus Hydroxiden ($OH^-$), Carbonaten ($CO_3^{2-}$), Nitraten ($NO_3^-$), Sulfaten ($SO_4^{2-}$) und Chloriden ($Cl^-$).

Das basische Trägermaterial kann ein Hydrotalcit oder eine hydrotalcitartige Verbindung sein. Unter Hydrotalcit versteht der Fachmann Aluminium-Magnesium-Hydroxycarbonate.

In einer bevorzugten Ausführungsform ist das basische Trägermaterial ein Hyrotalcit der Formel $Mg_6Al_2(OH)_{16}(CO_3) \cdot 4\ H_2O$.

Der Katalysator enthält Platin und optional Nickel, die im Folgenden einzeln oder gemeinsam auch als metallische Spezies bezeichnet werden. Die metallische Spezies bildet die katalytisch aktiven Zentren des Katalysators. Der Begriff "metallische Spezies" beinhaltet hierbei keine Aussage über die Oxidationsstufe des Platins oder Nickels. Mit anderen Worten wird damit nicht das Vorliegen des elementaren Zustands mit der Oxidationsstufe 0 bezeichnet. Der hierin verwendete dem Fachmann bekannte Begriff "Oxidationsstufe" bedeutet die formale Ladung eines Atoms innerhalb einer Verbindung bzw. die tatsächliche Ladung einatomiger Ionen. Atome im elementaren Zustand weisen per Definition die Oxidationsstufe 0 auf.

Im Fall der basisch katalysierten Depolymerisation von Lignin kann auch das basische Trägermaterial allein katalytisch wirken. Diese Reaktion ist allerdings nicht selektiv im Sinne der vorliegenden Erfindung und ermöglicht keine hohen Ausbeuten der gewünschten Phenolkomponenten. Die Ausstattung des basischen Trägermaterials mit Platin und optional Nickel erlaubt überraschenderweise die gewünschte Selektivität der katalytischen Depolymerisation des Lignins und erhöht die Ausbeute der gewünschten Produktfraktionen.

Bevorzugt enthält der Katalysator nicht mehr als 15 Gew.-% der metallischen Spezies, bezogen auf das Gesamtgewicht von Trägermaterial und der metallischen Spezies, besonders bevorzugt nicht mehr als 12 Gew.-%, insbesondere nicht mehr als 9 Gew.-%.

In einer bevorzugten Ausführungsform enthält der Katalysator die metallische Spezies in einem Bereich von 1-15 Gew.-%, beispielsweise 15 Gew.-% metallische Spezies, 10 Gew.-% metallische Spezies, 9 Gew.-% metallische Spezies, 8 Gew.-% metallische Spezies, 7 Gew.-% metallische Spezies, 6 Gew.-% metallische Spezies, 5 Gew.-% metallische Spezies, 4 Gew.-% metallische Spezies, 3 Gew.-% metallische Spezies, 2 Gew.-% metallische Spezies oder 1 Gew.-% metallische Spezies.

Der Katalysator kann Platin in einem Gewichtsanteil von 1-10 Gew.-% enthalten, beispielsweise 1 Gew.-%, 2 Gew.-%, 3 Gew.-%, 4 Gew.-%, 5 Gew.-%, 6 Gew.-%, 7 Gew.-%, 8 Gew.-%, 9 Gew.-%, 10 Gew.-% oder Zwischenstufen davon. Darunter ist zu verstehen, dass 1 -10 % des Gesamtgewichts des Katalysators, enthaltend Trägermaterial und metallische Spezies, aus Platinspezies bestehen. In einer bevorzugten Ausführungsform enthält der Katalysator Platin in einem Gewichtsanteil von 2 - 8 Gew.-%, noch bevorzugter 3 - 7 Gew.-%.

Das Platin liegt bevorzugt als metallisches Platin vor, also in der Oxidationsstufe 0.

Der Katalysator kann Nickel in einem Gewichtsanteil von 0 - 5 Gew.-% enthalten, beispielsweise 0 Gew.-%, 1 Gew.-%, 2 Gew.-%, 3 Gew.-%, 4 Gew.-%, 5 Gew.-% oder Zwischenstufen davon. Darunter ist zu verstehen, dass 0 - 5 % des Gesamtgewichts des Katalysators, enthaltend Trägermaterial und metallische Spezies, aus Nickelspezies bestehen. In einer bevorzugten Ausführungsform enthält der Katalysator Nickel in einem Gewichtsanteil von 0,1 - 5 Gew.-%, noch bevorzugter 1 - 4 Gew.-%.

In einer bevorzugten Ausführungsform enthält der Katalysator 5 Gew.-% Platin und 1 Gew.-% Nickel.

In einer weiteren bevorzugten Ausführungsform enthält der Katalysator 5 Gew.-% Platin und 2 Gew.-% Nickel.

In einer weiteren bevorzugten Ausführungsform enthält der Katalysator 5 Gew.-% Platin ohne Nickel.

Bevorzugt liegt die metallische Spezies partikelförmig auf dem basischen Trägermaterial vor.

Es kann bevorzugt sein, dass die Oberfläche der Platin-umfassenden Partikel der metallischen Spezies mindestens 1 $m^2$/g beträgt, bevorzugter mindestens 2 $m^2$/g, noch bevorzugter mindestens 4 $m^2$/g. Die Oberfläche der Platin-umfassenden Partikel der metallischen Spezies kann mittels der später beschriebenen Methode der CO-Adsorption ermittelt werden, welche einen Reduktionsschritt umfasst.

In einer bevorzugten Ausführungsform verfügt der Katalysator über eine BET-Oberfläche von weniger als 50 $m^2$/g, bevorzugt weniger als 40 $m^2$/g, besonders bevorzugt weniger als 20 $m^2$/g. Bevorzugt verfügt das basische Trägermaterial über eine BET-Oberfläche im Bereich von 3 bis 50 $m^2$/g, bevorzugt im Bereich von 4 bis 40$m^2$/g. Die BET-Oberfläche des Katalysators kann ebenfalls nach ISO 9277:2010 mit Stickstoff als Adsorbat bestimmt werden.

Geeignete Katalysatoren können durch eine Reihe von dem Fachmann bekannten Verfahren hergestellt werden, wie beispielsweise Präzipitationsmethoden, Imprägnierungsmethoden, Adsorptionsmethoden oder Ionenaustausch-Methoden.

Bevorzugt werden geeignete Katalysatoren durch die Imprägnierung des basischen Trägermaterials mit einer Lösung mindestens einer Verbindung des mindestens einen Metalls der metallischen Spezies und einer anschließenden Reduktion erhalten. Optional kann vor oder nach der Reduktion eine thermische Behandlung erfolgen.

Geeignete Katalysatoren können beispielsweise hergestellt werden durch ein Verfahren umfassend

I) Imprägnieren des basischen Trägermaterials mit einer Lösung, enthaltend mindestens eine Verbindung von mindestens einem Metall der metallischen Spezies und ein Lösungsmittel;
II) einen Reduktionsschritt.

In Schritt I) wird das basische Trägermaterial mit einer Lösung mindestens einer Verbindung von mindestens einem Metall der metallischen Spezies imprägniert. Dabei wird das zu imprägnierende Material, im vorliegenden Fall das basische Trägermaterial, mit einer Lösung der Verbindung oder Verbindungen des mindestens einen Metalls der metallischen Spezies in Kontakt gebracht.

Als Ergebnis des Imprägnierschritts wird ein imprägniertes (d.h. mit der mindestens einen Verbindung des Metalls oder der Metalle der metallischen Spezies beladenes) basisches Trägermaterial erhalten. Bevorzugt wird eine homogene bzw. gleichmäßige Ausrüstung des basischen Trägermaterials mit dieser mindestens einen Verbindung des mindestens einen Metalls der metallischen Spezies erreicht.

Dem Fachmann sind verschiedene Imprägnierverfahren bekannt, beispielsweise kapillarkontrolliertes Imprägnieren (so genannte "incipient wetness" Methoden) und diffusionskontrolliertes Imprägnieren (so genannte adsorptionskontrollierte Methoden). Zur Herstellung von geeigneten Katalysatoren für die vorliegende Erfindung sind prinzipiell beide Herangehensweisen geeignet.

Unter Imprägnierung wird im Allgemeinen das Zusammenbringen eines Trägermaterials mit einer Verbindung und die daraus resultierende Adsorption der Verbindung auf der Oberfläche des Trägermaterials verstanden. Im Fall eines porösen Trägermaterials handelt es sich dabei insbesondere auch um eine innere, d.h. innerhalb der Poren liegende, Oberfläche.

Das Zusammenbringen erfolgt beispielsweise dadurch, dass eine Lösung der mindestens einen Verbindung des mindestens einen Metalls der metallischen Spezies zu einer Suspension des basischen Trägermaterials in einem Lösungsmittel gegeben wird und diese Mischung gemischt wird. Es ist jedoch auch möglich, eine solche Lösung auf das basische Trägermaterial aufzusprühen oder das basische Trägermaterial zu einer solchen Lösung zu geben und diese Mischung dann zu durchmischen. Verfahren zum Durchmischen solcher Systeme sind dem Fachmann bekannt und umfassen beispielsweise Rühren oder Kneten, dabei können Zwangsmischer, Freifallmischer, Rührer, Kneter, Strömungsmischer oder Mischpumpen zum Einsatz kommen.

Bevorzugt wird die Zusammensetzung enthaltend basisches Trägermaterial und Lösung während des Imprägnierschritts kontinuierlich durchmischt.

In einer bevorzugten Ausführungsform liegt das basische Trägermaterial während des Imprägnierschritts suspendiert in der Lösung vor. Eine Suspension im Sinne der vorliegenden Erfindung ist eine Mischung aus einem Feststoff und einer Flüssigkeit, wobei der Feststoff gleichmäßig verteilt in Form von fein verteilten Festkörpern in der Flüssigkeit vorliegt.

In einer alternativen Ausführungsform liegen das basische Trägermaterial und die Lösung während des Imprägnierschritts in Form eines getränkten Pulvers vor. Darunter ist zu verstehen, dass die Lösung nur in einem solchen Ausmaß zugegeben wird, dass das basische Trägermaterial benetzt wird.

Für den Fall, dass das basische Trägermaterial gleichzeitig mit mehreren Verbindungen des mindestens einen Metalls der metallischen Spezies imprägniert werden soll, kann es bevorzugt sein die betreffenden Verbindungen in einer Lösung bereitzustellen. Es kann aber auch bevorzugt sein, die betreffenden Verbindungen in separaten Lösungen bereitzustellen. Beide Varianten eignen sich, um das basische Trägermaterial gleichzeitig mit beispielsweise Platin und Nickel auszustatten.

Erfindungsgemäß kann die Menge der metallischen Spezies in der Lösung in weiten Bereichen variieren. Die "Menge der metallischen Spezies" bezieht sich auf den Platin-plusgegebenenfalls-Nickel-Anteil in der Lösung. Besonders gute Ergebnisse werden erhalten, wenn die Lösung die metallische Spezies in einer Menge von mindestens 1 Gew.-% bezogen auf die Menge des Lösungsmittels enthält, insbesondere mindestens 2 Gew.-%, vorzugsweise mindestens 5 Gew.-%, bevorzugt mindestens 10 Gew.-%. Insbesondere kann die Lösung die metallische Spezies in einer Menge im Bereich von 1 Gew.-% bis 80 Gew.-% enthalten, insbesondere im Bereich von 2 Gew.-% bis 70 Gew.-%, vorzugsweise im Bereich von 5 Gew.-% bis 60 Gew.-%, bevorzugt im Bereich von 10 Gew.-% bis 50 Gew.-%.

Der Imprägnierschritt kann bei Raumtemperatur durchgeführt werden. Der Imprägnierschritt kann jedoch ebenso bei einer gegenüber Raumtemperatur verringerten oder erhöhten Temperatur durchgeführt werden. Während des Imprägnierschritts kann die Temperatur der Mischung, enthaltend basisches Trägermaterial und die Lösung, beispielsweise 10 °C bis 90 °C betragen, bevorzugter 20 °C bis 80 °C.

Die Dauer des Imprägnierschritts wird so gewählt, dass sich die mindestens eine Verbindung des mindestens einen Metalls der metallischen Spezies in ausreichender Menge auf dem basischen Trägermaterial abscheiden kann. Eine geeignete Zeitdauer kann der Fachmann anhand von Routineversuchen ermitteln.

Bevorzugt scheidet sich die mindestens eine Verbindung des mindestens einen Metalls der metallischen Spezies vollständig aus der Lösung auf dem basischen Trägermaterial ab. Nach dem Imprägnierschritt ist das Lösungsmittel dementsprechend frei von der Verbindung des mindestens einen Metalls der metallischen Spezies. Unter "frei von der Verbindung" versteht der Fachmann eine Konzentration, die über einen dem Fachmann prinzipiell bekannten Edelmetallnachweis mit Zinnchlorid im salzsauren Milieu nicht mehr nachgewiesen werden kann.

Die eingesetzte Menge des basischen Trägermaterials während der Herstellung hängt von der gewünschten Menge der metallischen Spezies ab, die auf dem basischen Trägermaterial abgeschieden werden soll und damit auch von der Konzentration der eingesetzten Lösung der mindestens einen Verbindung des mindestens einen Metalls der metallischen Spezies.

Das basische Trägermaterial liegt während des Imprägnierschritts beispielsweise in einem Bereich von 5 Gew.-% bis 95 Gew.-% vor, bezogen auf die Gesamtmenge von Lösung und basischem Trägermaterial, bevorzugter in einem Bereich von 10 Gew.-% bis 90 Gew.-%.

Bevorzugt ist die mindestens eine Verbindung des mindestens einen Metalls der metallischen Spezies über thermische Zersetzung oder durch nasschemische Reduktion in den elementaren Zustand überführbar.

Geeignete Verbindungen des mindestens einen Metalls der metallischen Spezies sind beispielsweise Salze, Komplexverbindungen oder Organometallverbindungen.

Platinverbindungen, die für das Imprägnieren eines basischen Trägermaterials eingesetzt werden können, sind dem Fachmann bekannt. Beispielsweise ist die Platinverbindung eine Pt(II)- oder eine Platin(IV)-Verbindung, z.B. ein Pt(II)- oder Pt(IV)-Salz oder eine Pt(II)- oder Pt(IV)-Komplexverbindung oder eine Pt-Organometallverbindung. Als beispielhafte Platinverbindungen können ein Platinhalogenid oder eine Säure davon, Hexachloroplatinsäure oder ein Salz dieser Säure, Kaliumtetrachloroplatinat, Platinnitrat, Platinacetylacetonat, Platinoxalat oder eine Mischung aus mindestens zwei dieser Verbindungen genannt werden.

Nickelverbindungen, die für das Imprägnieren eines basischen Trägermaterials eingesetzt werden können, sind dem Fachmann ebenfalls bekannt. Beispielsweise ist die Nickelverbindung eine Ni(II)-Verbindung, z.B. ein Ni(II)-Salz oder eine Ni(II)-Komplexverbindung oder eine Ni-Organometallverbindung. Als beispielhafte Nickelverbindungen können ein Nickelnitrat, ein Nickelhydroxid, ein Nickelhalogenid oder eine Mischung aus mindestens zwei dieser Verbindungen genannt werden.

Die Lösung enthält außerdem mindestens ein Lösungsmittel.

Die Lösung kann auch weitere Komponenten, wie beispielweise Säuren, enthalten.

Das mindestens eine Lösungsmittel kann ausgewählt sein aus der Gruppe bestehend aus Wasser und organischen Lösungsmitteln. Organische Lösungsmittel können beispielsweise Alkohole, wie Methanol oder Ethanol, sein.

Optional kann das imprägnierte basische Trägermaterial, das nach Schritt I) erhalten wurde, vor Durchführung der Reduktion in Schritt II) zunächst getrocknet und dabei teilweise oder vollständig vom Lösungsmittel befreit werden.

Bevorzugt kann sein, das imprägnierte basische Trägermaterial abzufiltrieren und zu trocknen.

Das Trocknen des imprägnierten Trägermaterials erfolgt beispielsweise bei einer Temperatur unterhalb von 250 °C, bevorzugter unterhalb von 200 °C, noch bevorzugter unterhalb von 150 °C.

Insbesondere kann das Trocknen unter vermindertem Druck erfolgen, bevorzugt bei einem Druck von unter 300 mbar.

Bevorzugt erfolgt die Trocknung für einen Zeitraum von 0,5 h bis 24 h, bevorzugt für einen Zeitraum von 2 h bis 20 h.

Optional kann das Verfahren nach Schritt I) und vor Schritt II) auch eine thermische Behandlung des imprägnierten Trägermaterials umfassen. Dem Fachmann ist eine solche thermische Behandlung auch als Kalzinieren bekannt.

In einer bevorzugten Ausführungsform führt die thermische Behandlung des imprägnierten basischen Trägermaterials zur Zersetzung der mindestens einen Verbindung des mindestens einen Metalls der metallischen Spezies.

Die thermische Behandlung wird bevorzugt unter Anwesenheit von Sauerstoff durchgeführt.

In einer Ausführungsform und falls nicht getrocknet wurde, führt die optionale thermische Behandlung zum Verdampfen des Lösungsmittels. In einer Ausführungsform wird durch die thermische Behandlung das Lösungsmittel verdampft und die mindestens eine Verbindung des mindestens einen Metalls der metallischen Spezies vollständig zersetzt.

Die thermische Behandlung kann bei einer Temperatur von weniger als 1000 °C, 900 °C, 800 °C, 700 °C, 600 °C, 500 °C, 400 °C oder weniger als 300 °C stattfinden. In einer Ausführungsform wird das imprägnierte basische Trägermaterial bei einer Temperatur von 150 °C bis 250 °C thermisch behandelt.

Bevorzugt wird das imprägnierte basische Trägermaterial in mehreren Stufen thermisch behandelt. Darunter ist zu verstehen, dass das imprägnierte basische Trägermaterial zunächst bei einer ersten Temperatur und anschließend bei mindestens einer weiteren Temperatur thermisch behandelt wird. Bevorzugt ist die erste Temperatur niedriger als die mindestens eine weitere Temperatur. Bevorzugt ist die erste Temperatur im Bereich von 100 - 200 °C. Bevorzugt ist die mindestens eine weitere Temperatur im Bereich von 200 - 300 °C.

In einer weiteren bevorzugten Ausführungsform wird die Temperatur während der thermischen Behandlung erhöht. Die Erhöhung der Temperatur kann stufenweise oder kontinuierlich oder durch eine Kombination von stufenweiser und kontinuierlicher Erhöhung erfolgen.

Bevorzugt erfolgt die thermische Behandlung für einen Zeitraum von 0,5 h bis 24 h, bevorzugt für einen Zeitraum von 2 h bis 18 h.

In Schritt II) des Verfahrens zur Herstellung eines geeigneten Katalysators erfolgt eine Reduktion. Darunter ist zu verstehen, dass die nach der Imprägnierung auf dem basischen Trägermaterial vorliegende mindestens eine Verbindung des mindestens einen Metalls der metallischen Spezies in eine niedrigere Oxidationsstufe überführt wird.

Im Fall von Verbindungen des Platins kann es beispielsweise bevorzugt sein, das Platin von der Oxidationsstufe Pt(II) oder Pt(IV) in die Oxidationsstufe Pt(0) zu überführen.

Im Fall von Verbindungen des Nickels kann es beispielsweise bevorzugt sein, das Nickel von der Oxidationsstufe Ni(II) in die Oxidationsstufe Ni(0) zu überführen.

Dem Fachmann sind Methoden zur Reduktion und geeignete Reduktionsmittel prinzipiell bekannt. Der Reduktionsschritt kann beispielsweise unter reduzierender Atmosphäre oder nasschemisch erfolgen. Insbesondere kann der Reduktionsschritt unter Formiergasatmosphäre, mit reduzierenden Säuren, deren Salzen oder reduzierenden Borverbindungen durchgeführt werden. Unter Formiergas versteht der Fachmann eine Gasmischung, die Stickstoff und Wasserstoff enthält, beispielsweise 95 Vol.-% Stickstoff und 5 Vol.-% Wasserstoff. Im Fall einer nasschemischen Reduktion wird als Reduktionsmittel bevorzugt Ameisensäure oder ein Salz der Ameisensäure, beispielsweise Natriumformiat, eingesetzt.

Im Fall der nasschemischen Reduktion kann der Reduktionsschritt direkt in der Imprägnierlösung durchgeführt werden, d.h. das imprägnierte Trägermaterial, das nach Schritt I) erhalten wurde, wird nicht vom Lösungsmittel abgetrennt. In anderen Worten kann es bevorzugt sein, das Reduktionsmittel direkt nach Schritt I) zuzugeben.

Der Reduktionsschritt erfolgt beispielsweise bei einer Temperatur unterhalb von 400 °C, bevorzugter unterhalb von 350 °C, besonders bevorzugt unterhalb von 300 °C. Im Fall der nasschemischen Reduktion kann es bevorzugt sein, die Reduktion bei einer Temperatur von unter 100 °C durchzuführen.

Bevorzugt erfolgt der Reduktionsschritt für einen Zeitraum von 0,5 h bis 24 h, bevorzugt für einen Zeitraum von 2 h bis 15 h.

Es kann bevorzugt sein, das in Schritt II) erhaltene Material einem weiteren Verfahrensschritt zu unterziehen.

Beispielsweise kann es bevorzugt sein, das Material das nach Schritt II) erhalten wurde, zu trocknen und dabei teilweise oder vollständig vom Lösungsmittel zu befreien.

In einer bevorzugten Ausführungsform wird das in Schritt II) erhaltene Material abfiltriert und getrocknet.

Das Trocknen erfolgt beispielsweise bei einer Temperatur unterhalb von 250 °C, bevorzugter unterhalb von 200 °C, noch bevorzugter unterhalb von 150 °C.

Insbesondere kann das Trocknen unter vermindertem Druck erfolgen, bevorzugt bei einem Druck von unter 300 mbar.

Bevorzugt erfolgt das Trocknen unter Ausschluss von Sauerstoff.

Bevorzugt erfolgt die Trocknung für einen Zeitraum von 0,5 h bis 24 h, bevorzugt für einen Zeitraum von 2 h bis 20 h.

Im erfindungsgemäßen Verfahren umfasst die Reaktionsmischung A in Verfahrensschritt a) neben Lignin und dem Katalysator ein Lösungsmittel.

Das Lösungsmittel kann mehrere chemische Substanzen enthalten d.h. das Lösungsmittel kann auch ein Lösungsmittelgemisch sein. Das Lösungsmittel kann Wasser und/oder ein organisches Lösungsmittel enthalten. Das organische Lösungsmittel kann ein Alkohol, wie Methanol, Ethanol, Propanol, Isopropanol oder ein Keton wie Aceton sein.

Die Reaktionsmischung A kann das Lösungsmittel zu mindestens 60 Gew.-% umfassen, bevorzugter zu mindestens 70 Gew.-%, noch bevorzugter zu mindestens 80 Gew.-%.

Bevorzugt enthält das Lösungsmittel mindestens 10 Gew.-% Wasser bezogen auf das Gesamtgewicht des Lösungsmittels, bevorzugter mindestens 20 Gew.-%, am bevorzugtesten mindestens 30 Gew-%. Beispielsweise enthält das Lösungsmittel Wasser im Bereich von 10 - 80 Gew.-%, bevorzugter im Bereich von 20 - 70 Gew.-%, noch bevorzugter im Bereich von 30 - 60 Gew.-%,

Bevorzugt enthält das Lösungsmittel Wasser und einen Alkohol, bevorzugt Wasser und Methanol, Wasser und Ethanol, Wasser und Propanol oder Wasser und Isopropanol. Bevorzugt enthält das Lösungsmittel 5 - 95 Gew.-% Alkohol, bevorzugter 15 - 85 Gew.-%, noch bevorzugter 25 - 75 Gew.-%, am bevorzugtesten 30 - 60 Gew.-%.

Die Verwendung des hierin beschriebenen Katalysators erlaubt die selektive katalytische Depolymerisation des Lignins unter Einsatz von geringeren Katalysatormengen als im Stand der Technik beschrieben. In einer bevorzugten Ausführungsform liegt der Katalysator in der Reaktionsmischung A zu weniger als 30 Gew.-% bezogen auf die Gesamtmenge von Katalysator und Lignin, vor, bevorzugt zu weniger als 20 Gew.-%, noch bevorzugter zu weniger als 10 Gew.-%, besonders bevorzugt zu weniger als 5 Gew.-%. In einer bevorzugten Ausführungsform liegt der Katalysator in der Reaktionsmischung A in einem Bereich von 0,1 - 30 Gew.-% bezogen auf die Gesamtmenge von Katalysator und Lignin, vor, bevorzugt in einem Bereich von 0,5 - 20 Gew.-%, noch bevorzugter in einem Bereich von 1-15 Gew.-%.

Das erfindungsgemäße Verfahren umfasst in einem Verfahrensschritt b) das Erwärmen der Reaktionsmischung A.

Die genauen Abbaubedingungen hängen vom eingesetzten Lignin, dem verwendeten Katalysator und der gewünschten Produktzusammensetzung ab.

Die Reaktionsmischung A kann während des Verfahrens gerührt werden.

Die Reaktionsmischung A wird auf eine Reaktionstemperatur erwärmt. Darunter ist die Temperatur zu verstehen, die nach einer Aufheizphase der Reaktionsmischung erreicht wird. Bevorzugt ist die Reaktionstemperatur nach einer Aufheizphase von nicht mehr als 90 min erreicht, noch bevorzugter nicht mehr als 60 min.

Bevorzugt wird die Reaktionsmischung A auf eine Reaktionstemperatur von unter 400 °C erwärmt, besonders bevorzugt unter 300 °C, am bevorzugtesten unter 250 °C. Bevorzugt wird die Reaktionsmischung A auf eine Reaktionstemperatur im Bereich von 50 °C bis 400 °C erwärmt, vorzugsweise auf eine Reaktionstemperatur im Bereich von 100 °C bis 300 °C, besonders bevorzugt auf eine Reaktionstemperatur im Bereich von 150 °C bis 250 °C.

In einer bevorzugten Ausführungsform wird die Reaktionstemperatur im Verfahrensschritt b) über einen Zeitraum von unter 240 min gehalten, bevorzugter über einen Zeitraum von unter 180 min, insbesondere über einen Zeitraum von unter 150 min. Bevorzugt wird Reaktionstemperatur über einen Zeitraum von 5 bis 240 min gehalten, besonders bevorzugt über einen Zeitraum von 20 bis 180 min, insbesondere über einen Zeitraum von 30 bis 150 min.

Methoden zum Erwärmen einer Reaktionsmischung sind prinzipiell bekannt. In einer bevorzugten Ausführungsform erfolgt das Erwärmen durch eine Mantelheizung.

Das erfindungsgemäße Verfahren ermöglicht den Abbau von Lignin ohne die Anwendung von erhöhtem Druck.

In einer bevorzugten Ausführungsform wird das Verfahren in einem geschlossenen Behälter durchgeführt.

Da während der thermischen Behandlung von Reaktionsgemisch A auch gasförmige Produkte entstehen können, kann sich der Druck im Behälter, in dem die thermische Behandlung durchgeführt wird, erhöhen. Der Druck während Schritt b) kann weniger als 150 bar, bevorzugt weniger als 100 bar, besonders bevorzugt weniger als 50 bar betragen. Bevorzugt beträgt der Druck während Schritt b) zwischen 0,1 bar und 35 bar, besonders bevorzugt 1 bar bis 10 bar, insbesondere 1 bar bis 5 bar.

Ein weiterer Vorteil des erfindungsgemäßen Verfahrens ist, dass nicht unter Wasserstoff- oder Inertgasatmosphäre gearbeitet werden muss.

Durch das erfindungsgemäße Verfahren wird eine Mischung B erhalten, umfassend ein Produktgemisch, den Katalysator und das Lösungsmittel.

Das Produktgemisch enthält monomere und oligomere Produkte, die in organischen Lösungsmitteln löslich sind. Das Produktgemisch kann auch weitere Produkte, wie polymere Lignin-Umlagerungsprodukte oder gasförmige Produkte umfassen. Die gasförmigen Produkte enthalten typischerweise $CO_2$ und $H_2$. Außerdem kann das Produktgemisch Produkte enthalten, die wasserlöslich sind, diese werden als wasserlösliche Produktfraktion bezeichnet.

Zur Definition der Begriffe "monomere Produkte", "oligomere Produkte" und "Polymere" sei prinzipiell auf die Definition nach IUPAC verwiesen. Unter "Oligomeren" werden Moleküle mit mittlerem Molekulargewicht verstanden, die aus mehreren kleineren sich wiederholenden Einheiten bestehen. Unter mittlerem Molekulargewicht ist zu verstehen, dass sich die Eigenschaften des Moleküls nicht ändern, wenn eine oder wenige der kleineren Einheiten entfernt werden. Bevorzugt umfasst der Begriff "Oligomer" Verbindungen mit mindestens drei und/oder bis zu 20 monomeren Einheiten.

Im Zusammenhang mit der vorliegenden Erfindung werden solche Produkte als monomere bzw. oligomere Komponenten bezeichnet, die durch das erfindungsgemäße Verfahren aus Lignin gewonnen werden.

Bevorzugt sind die monomeren Produkte in Ethylacetat löslich. Die oligomeren Produkte sind bevorzugt in THF löslich.

Die monomeren und oligomeren Produkte umfassen bevorzugt Bausteine, die mindestens einen aromatischen Ring mit mindestens einem sauerstoffhaltigen Substituenten enthalten. Mit anderen Worten, die monomeren und oligomeren Produkte umfassen bevorzugt hauptsächlich Phenolbausteine. Das Vorhandensein von Phenolbausteinen kann bevorzugt über die Titrierung der OH-Gruppen nach Folin-Coicalteu bestimmt werden.

Bevorzugt umfassen die monomeren und oligomeren Produkte mindestens 40 Gew.-% Phenolbausteine, bezogen auf das Gesamtgewicht von monomeren und oligomeren Bestandteilen, bevorzugter mindestens 50 Gew.-%.

Bevorzugt wird durch das erfindungsgemäße Verfahren ein Produktgemisch erhalten, bei dem mindestens 50 Gew.-% des in Reaktionsmischung A eingesetzten Lignins in monomere und oligomere Produkte umgesetzt wurden, bevorzugter mindestens 60 Gew.-%. Mit anderen Worten, im erfindungsgemäßen Verfahren wird eine Ausbeute von mindestens 50 Gew.-% der Zielprodukte erhalten und der Anteil an unerwünschten Nebenprodukten wird minimiert. Unter unerwünschten Nebenprodukten werden im Sinne der vorliegenden Erfindung die Koks-Fraktion, die wasserlösliche Produktfraktion und die gasförmige Produktfraktion verstanden.

Die Ausbeute wird mit der Formel

$$\text{Ausbeute (in Gew.-\%)}$$
$$= (\text{Gewicht der monomeren Produkte} + \text{Gewicht der oligomeren Produkte} / \text{Gewicht des eingesetzten Lignins}) \times 100$$

bestimmt.

Bevorzugt wird durch das erfindungsgemäße Verfahren ein Produktgemisch erhalten, das weniger als 30 Gew.-% der Koks-Fraktion enthält. Darunter ist zu verstehen, dass weniger als 30 Gew.-% des entstehenden Produktgemisches, enthaltend polymere, monomere und oligomere Komponenten, sowie eventuell eine wasserlösliche Fraktion und gasförmige Produkte, aus dieser unlöslichen Fraktion bestehen. Bevorzugter werden weniger als 25 Gew.-% der Koks-Fraktion erhalten, noch bevorzugter weniger als 20 Gew.-%, am bevorzugtesten weniger als 10 Gew.-%.

Bevorzugt wird durch das erfindungsgemäße Verfahren ein Produktgemisch erhalten, das mindestens 5 Gew.-% monomere Produkte enthält, bevorzugter mindestens 10 Gew.-%. Bevorzugt wird durch das erfindungsgemäße Verfahren ein Produktgemisch erhalten, das 1 - 30 Gew.-% monomere Produkte enthält, bevorzugter 5-20 Gew.-%.

Bevorzugt wird durch das erfindungsgemäße Verfahren ein Produktgemisch erhalten, das weniger als 20 Gew.-% monomere Produkte enthält, die keine aromatische Einheit haben, bevorzugter weniger als 15 Gew.-%, noch bevorzugter weniger als 10 Gew.-%.

Bevorzugt umfassen die monomeren Produkte nicht mehr als 20 Kohlenstoff-Atome, bevorzugt nicht mehr als 15 Kohlenstoffatome.

Bevorzugt haben die monomeren Produkte ein mittleres Molekulargewicht von weniger als 1500 g/mol, bevorzugter weniger als 1000 g/mol. Das mittlere Molekulargewicht kann über Gel-Permeations-Chromatographie (GPC) bestimmt werden.

Bevorzugt umfasst das Produktgemisch mindestens ein monomeres Produkt, das einen Phenolbaustein enthält. Das Vorhandensein solcher Produkte mit phenolischen OH-Gruppen kann nach der Methode von Folin-Coicalteu bestimmt werden.

Bevorzugt umfasst das Gesamtgewicht der monomeren Produkte mindestens 40 Gew.-% monomere Produkte, die ein aromatisches System mit mindestens einem Sauerstoff-haltigen Substituenten aufweisen, bevorzugter mindestens 50 Gew.-%, noch bevorzugter mindestens 60 Gew.-%. Der Anteil dieser monomeren Produkte kann mittels Gaschromatographie mit Massenspektrometrie-Kopplung (GC-MS) bestimmt werden.

Bevorzugt umfassen die monomeren Produkte mindestens ein Produkt aus der Gruppe enthaltend alkylierte Phenole, alkylierte Alkoxyphenole, Catechole, alkylierte Catechole und alkylierte Alkoxycatechole. Die Charakterisierung der monomeren Produkte kann mittels GC-MS erfolgen.

Bevorzugt wird durch das erfindungsgemäße Verfahren ein Produktgemisch erhalten, das mindestens 40 Gew.-% oligomere Produkte enthält, bevorzugter mindestens 50 Gew.-%, noch bevorzugter mindestens 60 Gew.-%.

Bevorzugt haben die oligomeren Produkte ein mittleres Molekulargewicht von weniger als 10.000 g/mol, bevorzugter weniger als 8.000 g/mol.

Bevorzugt haben die oligomeren Produkte ein mittleres Molekulargewicht von nicht mehr als 70 % des mittleren Molekulargewichts des ursprünglich eingesetzten Lignins, bevorzugter nicht mehr als 60 %, noch bevorzugter nicht mehr als 55 %.

Bevorzugt umfasst das Produktgemisch mindestens ein oligomeres Produkt, dessen Monomerbausteine einen Phenolbaustein enthalten. Das Vorhandensein solcher Produkte mit phenolischen OH-Gruppen kann nach der Methode von Folin-Coicalteu bestimmt werden.

Bevorzugt umfassen die oligomeren Produkte mindestens ein Oligomer, das Monomere aus der Gruppe enthaltend alkylierte Phenole, alkylierte Alkoxyphenole, Catechole, alkylierte Catechole und alkylierte Alkoxycatechole enthält.

In einer bevorzugten Ausführungsform wird der Katalysator nach der Durchführung des erfindungsgemäßen Verfahrens von der Mischung B abgetrennt. Dieses Abtrennen kann beispielsweise durch Filtration erfolgen.

Das Verfahren kann auch einen Verfahrensschritt umfassen, in dem das Produktgemisch aus der Mischung B abgetrennt wird. Die Abtrennung des vollständigen Produktgemisches oder Teilen des Produktgemischs kann beispielsweise über Filtration, Verdampfen, Destillation, Zentrifugieren, Dekantieren, Sedimentation oder weiteren dem Fachmann bekannten Verfahren erfolgen.

In einer bevorzugten Ausführungsform kann das erfindungsgemäße Verfahren einen Schritt zur Fraktionierung, Isolierung oder Aufreinigung der Mischung B umfassen.

In einer bevorzugten Ausführungsform ist das erfindungsgemäße Verfahren Teil eines Prozesses, bei dem Biomasse in verschiedene Ströme geteilt wird und der Lignin-Anteil abgebaut wird.

In einer bevorzugten Ausführungsform umfasst das Verfahren einen weiteren Schritt, in dem ein Phenolharz aus mindestens einer der Komponenten des Produktgemisches hergestellt wird.

Die vorliegende Erfindung betrifft außerdem ein Produktgemisch, erhalten nach dem erfindungsgemäßen Verfahren, umfassend monomere und oligomere Produkte. Für bevorzugte Ausführungsformen sei auf die obigen Ausführungen verwiesen.

Die vorliegende Erfindung betrifft außerdem einen Katalysator, geeignet zum Einsatz im erfindungsgemäßen Verfahren. Für bevorzugte Ausführungsformen sei auf die obigen Ausführungen verwiesen.

Im Folgenden wird die Erfindung anhand von Ausführungsbeispielen konkret verdeutlicht, welche jedoch nicht als einschränkend zu verstehen sind.

Messmethoden

*Platin- und Nickelgehalt des Katalysators*

Der Platin- und Nickelgehalt wurde über optische Emissionsspektrometrie mit induktiv gekoppeltem Plasma (ICP-OES) bestimmt.

*BET-Oberfläche*

Die BET-Oberfläche wurde nach ISO 9277:2010 mit Stickstoff als Adsorbat bei 77 K gemäß der BET-Theorie bestimmt (Mehrpunkt-Methode).

*CO-Adsorption (Edelmetall-Oberfläche)*

Die Edelmetall-Oberfläche der Katalysatoren wurde über CO-Adsorption bestimmt. Hierfür wurde ein Katalysator zunächst für 20 Minuten bei 400 °C unter Formiergas, bestehend aus 95 % Argon und 5 % Wasserstoff, in einem geschlossenen Behältnis reduziert. Anschließend erfolgte ein pulsweises Dosieren von Kohlenstoffmonoxid (CO, mit Helium als Trägergas) in das Behältnis, in welchem sich der Katalysator befand. Dies erfolgte so lange, bis hinter dem Katalysator konstante CO-Peaks detektiert wurden. Durch Bestimmung der Peak-Fläche des dosierten CO und durch Bestimmen der Peak-Fläche des umgesetzten CO wurde die durch den Katalysator aufgenommene Menge an CO bestimmt. Hierfür wurde das Integral der Fläche des umgesetzten CO vom Integral der Fläche an dosiertem CO subtrahiert. Aus der so erhaltenen Menge an aufgenommenem CO wurde berechnet, wie viel CO je eingesetzter Menge an katalytisch aktiver Zusammensetzung, gespeichert wurde. Über Umrechnungen konnte aus der gemessenen, an den aktiven Zentren gespeicherten CO-Menge, die Oberfläche der aktiven Edelmetallzentren (oft auch als CO-Oberfläche oder Edelmetalloberfläche bezeichnet) bestimmt werden.

*Gelpermeationschromatographie (GPC)*

Die Bestimmung des Molekulargewichts der verschiedenen Komponenten erfolgte über Gelpermeationschromatographie (GPC, Thermo Scientific, Dionex ICS-5000+ mit einer PSS MCX analytical 100A + 1000A + 100 000A Säule; 8 mm x 300 mm, ebenfalls Thermo Fischer). Die Charakterisierung erfolgte bei 30 °C mit 0.1 mol/L NaOH als Eluent bei einer Flussrate von 0.5 mL/min. Die Detektion erfolgte bei 280 nm.
Vor der Injektion wurden die Proben in 0.1 mol L-1 NaOH gelöst und durch einen Membranfilter (0.45 $\mu$m) filtriert. Die SEC Kalibrierung erfolgte mit PSS-Standards (Polymer Standard Service, Mp: 976 000, 679 000, 470 000, 258 000, 194 000, 152 000, 78 400, 29 500, 10 200, 3 420, 891) und Vanillin. Die Standards wurden ebenfalls in NaOH gelöst (1 mg mL-1 in 0.1 mol/L NaOH.

*Gaschromatographie mit Massenspektrometrie-Kopplung (GC-MS)*

Qualitative und quantitative Analyse erfolgte über Gaschromatographie mit Massenspektrometrie-Kopplung (GC-MS, SHIMADZU GC-MS-QP 2020, HP-SM5 Kapillarsäule, 60 m x 0,25 mm x 0,25 $\mu$m). Die Temperatur des Systems wurde mit einer Heizrate von 10 °C/min von 50 °C auf 300 °C erhöht. Haltezeiten von 5 min bei 120 °C und 8 min bei 280 °C wurden gewählt. Als Trägergas wurde Helium verwendet. Die Injektionstemperatur betrug 250 °C. 5 mg der Probe wurden in 1 mL Ethylacetat gelöst, mit 100 $\mu$L Toluol (mit internem Standard) gemischt und direkt injiziert. 41 Monomerkomponenten wurden als Standards zur externen Kalibrierung verwendet, wobei jeweils bei Konzentrationen von 300 mg/L bis 0,3 mg/L in 10 Stufen kalibriert wurde. Zusätzlich wurde ein Toluol mit internem Standard verwendet.

*Bestimmung phenolischer Gruppen*

Phenolische Gruppen wurden nach der Methode von Folin-Coicalteu bestimmt, bei dem Hydroxyl-Gruppen mit einer farbigen Indikatorsubstanz titriert werden. Als Indikatorsystem diente ein Komplexsystem aus Molybdatophorsphorsäure und Wolframatophosphorsäure (3 $H_2O \cdot P_2O_5 \cdot 13$ $WO_3 \cdot 5$ $MoO_3 \cdot 10$ $H_3O$ oder 3 $H_2O \cdot P_2O_5 \cdot 14$ $WO_3 \cdot 4$ $MoO_3 \cdot 10$ $H_2O$). Die Intensität des blauen Komplexes nach Reduktion ist proportional zur Konzentration der phenolischen OH-Gruppen und wurde durch UV-VIS-Spektroskopie quantifiziert. Als Kalibriersubstanz diente Vanillin, einer Substanz mit bekanntem Anteil von OH-Gruppen.

*Erfindungsgemäßes Beispiel 1 (EB1)*

145.5 g Hydrotalcit (Sasol, BET-Oberfläche 19 $m^2$/g) wurden in 800 mL VE-Wasser suspendiert und 4.5 g Pt als Hexachloroplatinsäure ($H_2PtCl_6$-Lösung mit 33% Pt, Heraeus) hinzugegeben. Die Suspension wurde zwei Tage bei 80 °C gerührt. Anschließend wurden bei 70 °C 22.5 g Natriumformiat in 30 mL Wasser gelöst und zur Suspension hinzugegeben. Die Suspension wurde über Nacht bei 70 °C gerührt. Danach wurde die Suspension mit 1 L VE-Wasser verdünnt und nach Abkühlen auf Raumtemperatur filtriert. Der Rückstand wurde gewaschen und abschließend bei 120 °C getrocknet. Die Edelmetall-Oberfläche des Katalysators wurde zu 7 $m^2$/g bestimmt.

*Erfindungsgemäßes Beispiel 2 (EB2)*

5 g Pt als Platin(II)-nitrat (Pt($NO_3$)$_2$-Lösung mit 15.2 % Pt, Heraeus) wurden auf 30 mL verdünnt und homogenisiert. Die Lösung wurde zu 95 g Hydrotalcit (Sasol, BET-Oberfläche 19 $m^2$/g) gegeben und die Mischung homogenisiert. Die Mischung wurde über Nacht bei 110 °C unter Stickstoff-Atmosphäre im Vakuum getrocknet. Im Anschluss erfolgte eine thermische Behandlung über 14 h in einer sauerstoffhaltigen Atmosphäre, bei der die Temperatur schrittweise auf 250 °C erhöht wurde. Abschließend wurde das Material über 16 h mit Formiergas (95 Vol.-% Stickstoff, 5 Vol.-% Wasserstoff) bei bis zu 250 °C behandelt. Die Edelmetall-Oberfläche des Katalysators wurde zu 10 $m^2$/g bestimmt.

*Erfindungsgemäßes Beispiel 3 (EB3)*

Die Herstellung erfolgte analog zu EB2. Zusätzlich wurden 1 g Ni als Nickel(II)-nitrat-hexahydrat (Ni(NO$_3$)$_2$*6 H$_2$O mit 20 % Ni, Merck) der Platin(II)-nitrat-Lösung beigefügt, gemeinsam verdünnt und homogenisiert. Diese Lösung wurde zu 94 g Hydrotalcit zugegeben und die Mischung homogenisiert. Die Edelmetall-Oberfläche des Katalysators wurde zu 5 $m^2$/g bestimmt.

*Erfindungsgemäßes Beispiel 4 (EB4)*

Die Herstellung erfolgte analog zu EB2. Zusätzlich wurden 2 g Ni als Nickel(II)-nitrat-hexahydrat (Ni(NO$_3$)$_2$*6 H$_2$O mit 20 % Ni, Merck) der Platin(II)-nitrat-Lösung beigefügt, gemeinsam verdünnt und homogenisiert. Diese Lösung wurde zu 93 g Hydrotalcit zugegeben und die Mischung homogenisiert. Die Edelmetall-Oberfläche des Katalysators wurde zu 11 $m^2$/g bestimmt.

*Depolymerisierungen*

Im Folgenden werden Standardbedingungen für die Depolymerisation angegeben. 20 g Organosolv-Lignin (ChemicalPoint, mittleres Molekulargewicht 6.200 Da) wurden mit dem Katalysator vermischt und in 200 mL Lösungsmittel (45,9 Vol.-% Ethanol in Wasser) suspendiert.
Der Abbau des Lignins wurde in einem Autoklaven (PARR, 4871 Process Controller, Software: SpecView3) bei einer Rührgeschwindigkeit von 300 rpm durchgeführt. Die Reaktionsmischung wurde auf die Ziel-Temperatur aufgeheizt und für die gewünschte Zeit bei dieser Temperatur gehalten.
Nach dem Abkühlen der Mischung auf Raumtemperatur wurde der Katalysator abgetrennt und anschließend die Produktfraktionen voneinander getrennt. Dafür wurde die Mischung mit konz. Salzsäure (HCl 37 Gew.-%) auf einen pH-Wert von 2 eingestellt um die Lignin-Tar-Fraktion (enthaltend die oligomeren Produkte) auszufällen. Anschließend wurden die festen Bestandteile durch Vakuum-Filtration abgetrennt. Der Feststoff wurde 3-mal mit verdünnter Salzsäure gewaschen. Die wasserlösliche Phase wurde 3-mal mit Ethylacetat extrahiert, die organischen Phasen wurden vereinigt, über Natriumsulfat getrocknet und filtriert. Das Ethylacetat wurde in einem Rotationsverdampfer entfernt, der resultierende Feststoff war die Lignin-Öl-Fraktion (enthaltend die monomeren Produkte). Die nach der Vakuumfiltration erhaltenen Feststoffe wurden in THF aufgeschlämmt, um die oligomeren Produkte aufzulösen, die übrigens festen Bestandteile (die Koks-Fraktion, enthaltend polymere Umlagerungsprodukte des Lignins und weitere feste unlösliche Produkte) wurden erneut durch Vakuumfiltration abgetrennt. Die organische Phase wurde in einem Rotationsverdampfer abgedampft, um die oligomere ProduktFraktion zu erhalten.
Die Anteile an der Ausbeute für die verschiedenen Produktfraktionen wurden wie folgt berechnet:

$$\text{Ausbeute der monomeren Komponenten (in Gew.-\%)}$$

$$= (\text{Gewicht der Lignin-Öl-Fraktion} / \text{Gewicht des eingesetzten Lignins}) \times 100;$$

$$\text{Ausbeute der oligomeren Komponenten (in Gew.-\%)}$$

$$= (\text{Gewicht der Lignin-Tar-Fraktion} / \text{Gewicht des eingesetzten Lignins}) \times 100;$$

$$\text{Koks-Anteil (in Gew.-\%)}$$

$$= (\text{Gewicht der Koks-Fraktion} / \text{Gewicht des eingesetzten Lignins}) \times 100.$$

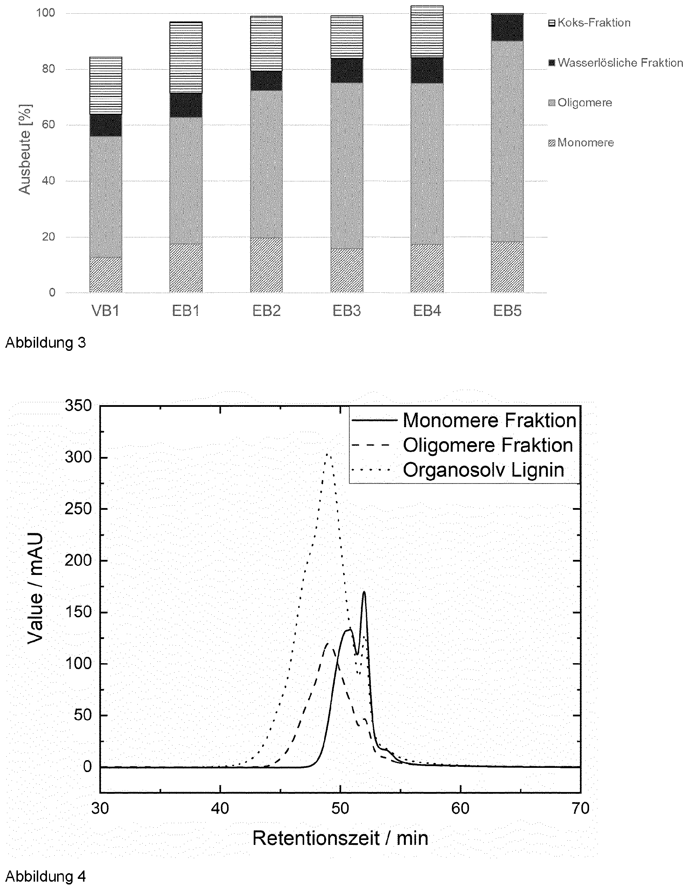

Abbildung 3 zeigt die Zusammensetzung des Produktgemisches von repräsentativen Depolymerisationen mit 4 erfindungsgemäßen Katalysatoren (EB1 - EB4) im Vergleich zu einem Hydrotalcit ohne Metallbeladung (VB1). Das Verhältnis von eingesetztem Lignin und Katalysator war konstant (20 Gew.-% Katalysator), alle Reaktionen wurden über 30 min bei 200 °C durchgeführt. In Abbildung 4 sind außerdem beispielhaft GPC-Chromatogramme gegenübergestellt, die zur Analyse des mittleren Molekulargewichts des eingesetzten Lignins, der monomeren und der oligomeren Produktfraktion der Depolymerisierung mit EB3 verwendet wurden.

Tabelle 1

| Katalysator | | $M_w$ [g/mol] Monomerfraktion | OH-Gruppen [mmol/g] Monomerfraktion | $M_w$ [g/mol] Oligomerfraktion | OH-Gruppen [mmol/g] Oligomerfraktion |
|---|---|---|---|---|---|
| VB1 | HTC | 600 | 5,3 | 12582 | 3,5 |
| EB1 | 3 %Pt/HTC | 485 | 4,5 | 1585 | 3,3 |
| EB2 | 5 %Pt//HTC | 462 | 5,1 | 1909 | 3,2 |
| EB3 | 5 %Pt+1 %Ni/ HTC | 838 | 5,2 | 3282 | 3,1 |
| EB4 | 5 %Pt+2 %Ni/ HTC | 754 | 5,4 | 3544 | 3,2 |
| EB5 | 5 %Pt+1 %Ni/ HTC | 809 | 4,2 | 2810 | 3,5 |

In Tabelle 1 sind die mittleren Molekulargewichte der Monomer- und Oligomer-Produktfraktionen zusammengefasst. Die Ergebnisse verdeutlichen, dass unter Einsatz der erfindungsgemäßen Katalysatoren der Umsatz des eingesetzten Lignins deutlich erhöht werden kann. Die phenolischen OH-Gruppen wurden sowohl für das eingesetzte Lignin als auch für die Produktfraktionen nach der Methode von Folin-Coicalteu titriert. Tabelle 1 enthält auch diese Ergebnisse. Bei allen hier gezeigten Katalysatorsystemen war die Konzentration der OH-Gruppen, repräsentativ für das Vorhandensein von Phenolbausteinen, vergleichbar zum eingesetzten Lignin (3,7 mmol/g), was auf eine Erhaltung dieser Bausteine während der Abbaureaktion schließen lässt.

In EB5 wurde der gleiche Katalysator wie in EB3 verwendet, allerdings wurden nur 1,2 Gew.-% Katalysator im Bezug auf das Gewicht des umzusetzenden Lignins eingesetzt. Die Depolymerisation erfolgte über 90 min bei 230 °C. EB5 verdeutlicht, dass unter Einsatz von geringen Mengen eines erfindungsgemäßen Katalysators und unter milden Reaktionsbedingungen eine hohe Ausbeute und die gewünschte Selektivität der Reaktion erreicht werden kann.

**Patentansprüche**

1. Verfahren zum katalysierten Abbau von Lignin, umfassend

   a) Bereitstellen einer Reaktionsmischung A, umfassend Lignin, einen Katalysator und ein Lösungsmittel;
   b) Erwärmen der Reaktionsmischung A unter Erhalt einer Mischung B, umfassend ein Produktgemisch, den Katalysator und das Lösungsmittel;
   wobei der Katalysator

   - ein basisches Trägermaterial,
   - Platin in einem Gewichtsanteil von 1-10 Gew.-% und
   - Nickel in einem Gewichtsanteil von 0 - 5 Gew.-% enthält.

2. Verfahren nach Anspruch 1, wobei das Lignin ausgewählt ist aus der Gruppe enthaltend Organosolv-Lignin, Kraft-Lignin, durch alkalischen Aufschluss erhaltenes Lignin, durch das Sulfat-Verfahren erhaltenes Lignin, durch das Sulfit-Verfahren erhaltenes Lignin, durch Extraktion mit Wasser erhaltenes Lignin, durch Hydrolyse mit Säuren erhaltenes Lignin, durch enzymatische Hydrolyse erhaltenes Lignin, durch Holzverzuckerung erhaltenes Lignin, durch Behandlung mit Mikroorganismen erhaltenes Lignin, Lignin aus Lignin-haltigen Prozessströmen der Bioraffinerie sowie deren Mischungen.

3. Verfahren nach Anspruch 1 oder 2, wobei das Lösungsmittel Wasser und einen Alkohol umfasst.

4. Verfahren nach einem der vorangegangenen Ansprüche, wobei der Katalysator in der Reaktionsmischung A zu weniger als 30 Gew.-% bezogen auf die Gesamtmenge von Katalysator und Lignin vorliegt.

5. Verfahren nach einem der vorangegangenen Ansprüche, wobei die Reaktionsmischung A auf eine Reaktionstemperatur von unter 400 °C erwärmt wird.

**6.** Verfahren nach einem der vorangegangenen Ansprüche, wobei die Reaktionstemperatur im Verfahrensschritt b) über einen Zeitraum von unter 240 min gehalten wird.

**7.** Verfahren nach einem der vorangegangenen Ansprüche, wobei das Produktgemisch weniger als 30 Gew.-% einer Koks-Fraktion enthält.

**8.** Verfahren nach einem der vorangegangenen Ansprüche, wobei mindestens 50 Gew.-% des in Reaktionsmischung A eingesetzten Lignins in monomere und oligomere Produkte umgesetzt werden.

**9.** Verfahren nach einem der vorangegangenen Ansprüche, wobei das Produktgemisch mindestens ein monomeres Produkt umfasst, das einen Phenolbaustein enthält.

**10.** Verfahren nach einem der vorangegangenen Ansprüche, wobei das Produktgemisch mindestens ein oligomeres Produkt umfasst, dessen Monomerbausteine einen Phenolbaustein enthalten.

**11.** Verfahren nach einem der vorangegangenen Ansprüche, wobei das basische Trägermaterial eine Mischung aus zweiwertigen und dreiwertigen Kationen enthält.

**12.** Verfahren nach einem der vorangegangenen Ansprüche, wobei das basische Trägermaterial mindestens eine Art von zweiwertigem Kation $M^{2+}$ ausgewählt aus der Gruppe bestehend aus Magnesium ($Mg^{2+}$), Nickel ($Ni^{2+}$), Eisen ($Fe^{2+}$), Cobalt ($Co^{2+}$), Kupfer ($Cu^{2+}$), Zink ($Zn^{2+}$), Calcium ($Ca^{2+}$), Zinn ($Sn^{2+}$), Blei ($Pb^{2+}$) und Kombinationen davon enthält.

**13.** Verfahren nach einem der vorangegangenen Ansprüche, wobei das basische Trägermaterial mindestens eine Art von dreiwertigem Kation $M^{3+}$ ausgewählt aus der Gruppe bestehend aus Aluminium ($Al^{3+}$), Eisen ($Fe^{3+}$), Chrom ($Cr^{3+}$), Mangan ($Mn^{3+}$) und Kombinationen davon enthält.

**14.** Produktgemisch erhältlich nach einem Verfahren nach Anspruch 1, umfassend monomere und oligomere Produkte.

**15.** Katalysator einsetzbar in einem Verfahren nach Anspruch 1, enthaltend

   - ein basisches Trägermaterial,
   - Platin in einem Gewichtsanteil von 1-10 Gew.-% und
   - Nickel in einem Gewichtsanteil von 0 - 5 Gew.-%.

β-O-4  4-O-5  α-O-4

β-5  β-β  5-5

Abbildung 1

Abbildung 2

Abbildung 3

Abbildung 4

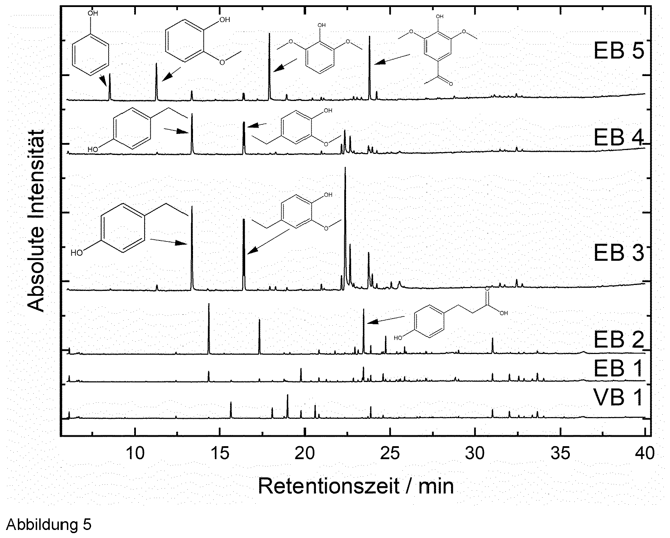

Abbildung 5

Europäisches
Patentamt

European
Patent Office

Office européen
des brevets

**EUROPÄISCHER RECHERCHENBERICHT**

Nummer der Anmeldung

EP 21 16 1951

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/201873 A1 (CROCKER MARK [US] ET AL) 4. Juli 2019 (2019-07-04) | 1-15 | INV.<br>B01J21/10<br>B01J23/42<br>C07G1/00 |
| Y | * Absätze [0022] - [0029]; Ansprüche 1-27 * | 1-15 | |
| Y | AGARWAL ASHUTOSH ET AL: "Advancement in technologies for the depolymerization of lignin", FUEL PROCESSING TECHNOLOGY, ELSEVIER BV, NL, Bd. 181, 25. September 2018 (2018-09-25), Seiten 115-132, XP085523102, ISSN: 0378-3820, DOI: 10.1016/J.FUPROC.2018.09.017 * Absatz [3.1.3.1.] - Absatz [3.1.3.2.] * | 1-15 | |
| Y | TOLEDANO ANA ET AL: "Microwave-assisted depolymerisation of organosolv lignin via mild hydrogen-free hydrogenolysis: Catalyst screening", APPLIED CATALYSIS B. ENVIRONMENTAL, Bd. 145, 1. Februar 2014 (2014-02-01), Seiten 43-55, XP55830265, AMSTERDAM, NL ISSN: 0926-3373, DOI: 10.1016/j.apcatb.2012.10.015 * das ganze Dokument * | 1-15 | RECHERCHIERTE SACHGEBIETE (IPC)<br><br>B01J<br>C07B<br>C07G |

-/--

Der vorliegende Recherchenbericht wurde für alle Patentansprüche erstellt

| Recherchenort | Abschlußdatum der Recherche | Prüfer |
|---|---|---|
| München | 5. August 2021 | Friedrich, Christof |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 21 16 1951

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | PARK JEESU ET AL: "Comparison of degradation features of lignin to phenols over Pt catalysts prepared with various forms of carbon supports", RSC ADVANCES, Bd. 6, Nr. 21, 1. Januar 2016 (2016-01-01) , Seiten 16917-16924, XP55830268, DOI: 10.1039/C5RA21875F Gefunden im Internet: URL:https://pubs.rsc.org/en/content/articl epdf/2016/ra/c5ra21875f> * das ganze Dokument * | 1-15 | |
| Y | US 2015/224485 A1 (MCGUIRE ROBERT [US]) 13. August 2015 (2015-08-13) * das ganze Dokument * | 1-15 | |
| Y | CN 105 669 381 A (UNIV BEIJING CHEMICAL TECH; BOEING INVEST CO LTD) 15. Juni 2016 (2016-06-15) * das ganze Dokument * | 1-15 | |
| Y | CN 111 389 453 A (UNIV EAST CHINA NORMAL) 10. Juli 2020 (2020-07-10) * das ganze Dokument * | 1-15 | |
| Y | US 2014/275468 A1 (KELLETT PATTI JEAN [US] ET AL) 18. September 2014 (2014-09-18) * das ganze Dokument * | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 5. August 2021 | Friedrich, Christof |

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 21 16 1951

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-08-2021

| Im Recherchenbericht angeführtes Patentdokument | Datum der Veröffentlichung | Mitglied(er) der Patentfamilie | Datum der Veröffentlichung |
|---|---|---|---|
| US 2019201873 A1 | 04-07-2019 | KEINE | |
| US 2015224485 A1 | 13-08-2015 | BR 112016018282 A8<br>CA 2939090 A1<br>CN 106163655 A<br>EP 3102324 A1<br>KR 20160119188 A<br>RU 2016135789 A<br>US 2015224485 A1<br>US 2017259252 A1<br>WO 2015120302 A1 | 30-06-2020<br>13-08-2015<br>23-11-2016<br>14-12-2016<br>12-10-2016<br>13-03-2018<br>13-08-2015<br>14-09-2017<br>13-08-2015 |
| CN 105669381 A | 15-06-2016 | KEINE | |
| CN 111389453 A | 10-07-2020 | KEINE | |
| US 2014275468 A1 | 18-09-2014 | BR 112015023228 A2<br>CA 2901590 A1<br>CN 105189413 A<br>EP 2970040 A1<br>JP 2016513626 A<br>US 2014275468 A1<br>WO 2014159040 A1<br>ZA 201505967 B | 18-07-2017<br>02-10-2014<br>23-12-2015<br>20-01-2016<br>16-05-2016<br>18-09-2014<br>02-10-2014<br>29-03-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 9631146 B2

**In der Beschreibung aufgeführte Nicht-Patentliteratur**

- Biorefineries-Industrial Processes and Products. **KAMM et al.** Ullmann's Encyclopedia of Industrial Chemistry, Electronic Release. WILEY-VCH, 2007

- **LI et al.** Catalytic Transformation of Lignin for the Production of Chemicals and Fuels. *Chem. Rev.,* 2015, vol. 115, 11559-11624
- **CHAUDHARYA et al.** *Green Chemistry,* 2017, vol. 19, 778, , 788